# DEMANDE DE BREVET EUROPEEN

(11) **EP 1 734 797 A1**
(43) Date de publication de la demande: **20.12.2006**
(21) Numéro de dépôt: 06290957.7
(22) Date de dépôt: 08.06.2006
(51) Int. Cl.: H05B 41/38, H05B 41/288

(54) **Procédé et dispositif de gestion de ballast notamment pour projecteur de véhicule automobile**

(30) Priorité: 17.06.2005 FR 0506194
(71) Demandeur: VALEO VISION, 93012 Bobigny Cédex (FR)
(72) Inventeur: Nicolai, Jean-Marc, 94200 Courbevoie (FR); Duarte, Marc, 93250 Villemomble (FR)

(57) **Abrégé**

Le procédé selon l'invention est apte à la gestion d'une lampe à décharge gazeuse notamment de projecteur de véhicule automobile. Le procédé est du type de ceux consistant à piloter des puissances d'alimentation initiales et nominales de la lampe au moyen de signaux de contrôle au cours des phases de fonctionnement de ladite lampe qui comprenent une phase d'amorçage, une phase d'allumage et une phase de régime stabilisé. Le procédé est caractérisé en ce que les signaux de contrôle comprennent des signaux de commande générés extérieurement au ballast et forçant chacune des puissances d'alimentation à une valeur choisie parmi un ensemble de puissances prédéterminées (P1, P2, P3, P4, P5) en fonction de chacune des phases. Le procédé permet par exemple de gérer les différents modes définis par les nouvelles réglementations de type AFS et d'optimiser la durée de vie de la lampe.

## Description

### DOMAINE TECHNIQUE DE L'INVENTION.

La présente invention concerne un procédé et un dispositif de gestion d'un ballast de lampe à décharge gazeuse de projecteur de véhicule automobile, et leur utilisation dans des systèmes d'éclairage évolués ou adaptatifs, notamment pour faire varier la puissance d'alimentation de lampes au xénon standard de type D1, D2, D3 ou D4, afin par exemple de gérer les différents modes définis par les nouvelles réglementations de type AFS et d'optimiser la durée de vie de la lampe.

### ARRIERE PLAN TECHNOLOGIQUE DE L'INVENTION.

Dans le but d'améliorer à la fois la puissance lumineuse et le rendement énergétique des dispositifs d'éclairage de véhicules, notamment des projecteurs, l'évolution technique actuelle conduit à remplacer les lampes à filament par des lampes à décharge gazeuse. A la différence des ampoules classiques, qui étaient conçues pour être connectées directement à la batterie du véhicule, ces nouvelles lampes nécessitent des tensions élevées, alternatives ou continues, selon le mode de fonctionnement, pour créer et entretenir la décharge électrique dans le gaz.

Ces tensions élevées, spécifiques à chaque type de lampes (de l'ordre de
25 kV pour l'allumage d'une lampe au xénon), sont produites à partir de la tension de bord par un module d'alimentation, qui assure également la régulation de puissance, connu sous le nom de "ballast".

Ce module d'alimentation comprend généralement, de manière connue en soi, un convertisseur DC/DC pour produire une haute tension continue à partir de la basse tension de la batterie, un convertisseur DC/AC pour produire la tension alternative nécessaire à l'alimentation de la lampe, un circuit pour produire l'impulsion d'amorçage.

Ces différents blocs sont pilotés par un bloc de contrôle électronique qui régule la puissance fournie à la lampe en fonction de sa caractéristique courant/tension, variable selon les phases de fonctionnement, et évoluant au cours de la vie de la lampe.

Il s'agit donc d'une régulation de puissance intrinsèque liée au fonctionnement de la lampe elle-même.

Le développement des systèmes d'éclairage évolués ou progressifs de type AFS (Advanced Front lighting Sytem ou Adaptive Front lighting System, en anglais) pour véhicules automobiles a, au contraire, fait apparaître le besoin d'une régulation et/ou d'une variabilité de la puissance depuis l'extérieur du ballast.

La nouvelle technologie d'éclairage dynamique DBL (Dynamic Bending Light, en anglais) adapte l'orientation des projecteurs avant en fonction de la vitesse du véhicule et des courbes de la route.

Les systèmes d'éclairage progressifs tiennent aussi compte de la lumière ambiante la nuit, et, de jour, sont capables d'assurer l'allumage et l'extinction des feux à l'entrée et à la sortie d'un tunnel.

Dans les systèmes simples à commande manuelle, l'intensité des feux doit également pouvoir varier rapidement : commutation feux de route/codes, appel de phares.

Dans ce dernier cas, la lampe doit travailler brièvement au-delà de sa puissance nominale; dans d'autres circonstances, il n'est pas nécessaire qu'elle continue de fonctionner au régime nominal.

On conçoit qu'une adaptation précise de la puissance électrique fournie à la lampe en fonction des besoins, conduit, en moyenne, à une diminution de la consommation de l'énergie de bord, et à une amélioration de la durée de vie de la lampe.

Des systèmes de gestion de la puissance électrique appliquée sont connus dans de nombreux domaines techniques où sont mises en oeuvre des lampes à décharge gazeuse.

Mais les spécifications techniques d'un procédé et d'un dispositif de gestion d'un ballast destiné à l'automobile comportent des contraintes propres qui n'existent généralement pas dans d'autres applications :
- rapidité de passage d'un mode de fonctionnement à un autre ;
- capacité de signalisation des défauts à distance (diagnostic de panne);
- capacité à être embarqué;
- compatibilité avec les équipements électroniques existants, notamment les réseaux de bord standard, par exemple LIN (Réseau local d'interconnexions ; Local Interconnect Network en anglais) ou CAN (Réseau local de contrôleurs ; Controller Area Network en anglais).

Dans le domaine des équipements pour automobiles, on connaît précisément un ballast de lampe à décharge, dont la puissance délivrée est commandée par un signal extérieur. Il est décrit dans la demande de brevet américain US6051939 publiée le 18 avril 2000.

Ce dispositif repose essentiellement sur la mémorisation et l'utilisation de la caractéristique courant/tension de la lampe. Il s'agit donc d'une méthode de contrôle extérieur de la puissance instantanée de la lampe, plutôt que d'un procédé de sélection de mode de fonctionnement en vue d'une optimisation de la durée de vie.

Un tel procédé où, lors de la phase d'allumage, l'on pilote l'intensité du courant et/ou de la puissance d'alimentation de la lampe en fonction d'un paramètre représentatif de la luminosité extérieure du véhicule, pour effectivement optimiser la durée de vie de la lampe, est en revanche décrit dans la demande de brevet européen EP1248498 de la demanderesse publiée le 9 octobre 2002.

Mais la portée de ce dernier procédé est restreinte au cas particulier du contrôle des feux en fonction de l'éclairage ambiant.

Ainsi que le montrent les documents de l'état de la technique relevés ci-dessus, il n'existe donc pas de procédé ou de dispositif générique de gestion d'un ballast de lampe à décharge, pour optimiser la durée de vie de la lampe, adapté aux divers systèmes d'éclairage intelligents présents ou futurs pour véhicules automobiles.

### DESCRIPTION GENERALE DE L'INVENTION.

La présente invention vise donc un procédé de gestion d'un ballast d'une lampe à décharge gazeuse de projecteur de véhicule automobile pour optimiser la durée de vie de cette lampe, répondre à de nouveaux besoins liés à la réglementation et au diagnostic de panne.

Ce procédé est du type de ceux, connus en soi, consistant à piloter les puissances d'alimentation initiale et nominale de la lampe au moyen de signaux de contrôle au cours des différentes phases de fonctionnement de celle-ci, telles que la phase d'amorçage, la phase d'allumage et la phase de régime stabilisé.

Le procédé selon l'invention est remarquable en ce que les signaux de contrôle comprennent des signaux de commande, générés extérieurement au ballast, forçant chacune des puissances d'alimentation à une valeur choisie parmi un ensemble de puissances prédéterminées en fonction de chacune des phases de fonctionnement.

Fort avantageusement, en l'absence de ces signaux de commande, la valeur de la puissance d'alimentation au cours des phases d'amorçage et d'allumage est une puissance initiale par défaut prédéterminée, et la puissance au cours de la phase de régime stabilisé est une puissance nominale par défaut également prédéterminée.

De préférence, chacun des signaux de commande est associé à un mode de fonctionnement spécifique, avantageusement au nombre de trois, de la lampe, et force la puissance d'alimentation à une puissance initiale spécifique prédéterminée et une puissance nominale spécifique prédéterminée pour chacune de ces phases.

Des caractéristiques supplémentaires du procédé selon l'invention, prises isolément ou en combinaison, sont que les signaux de contrôle comprennent de plus :
- un signal de validation des signaux de commande généré extérieurement au ballast;
- un signal d'anomalie généré par le ballast en cas d'anomalie de fonctionnement;
- un signal de demande d'état généré extérieurement au ballast consécutivement à la réception du signal d'anomalie;
- un code d'anomalie généré par le ballast consécutivement à la réception du signal de demande d'état.

On tire bénéfice du fait que chacun des signaux de commande est constitué d'un premier train d'impulsions rectangulaires de fréquence prédéterminée et de rapport cyclique prédéterminé, et que le signal de validation est une première impulsion rectangulaire émise simultanément aux signaux de commande et pendant une durée au moins égale à un nombre minimal de périodes du train d'impulsions, de préférence deux.

Les amplitudes du premier train et de la première impulsion de validation sont de préférence positives et égales à la tension de la batterie, ou de la source d'énergie électrique analogue, du véhicule. Cette première impulsion est active au niveau bas, et le niveau de tension de la batterie correspond à une absence de signal.

Avantageusement, dans le procédé selon l'invention, le signal d'anomalie, le signal de demande d'état et le code d'anomalie sont respectivement une deuxième impulsion rectangulaire, une troisième impulsion rectangulaire, et un second train d'impulsions rectangulaires, la durée de chacune des impulsions du second train étant représentative d'un type d'anomalie.

De préférence, les amplitudes des deuxième et troisième impulsions et du second train sont positives et égales à la tension de la batterie, ou de la source d'énergie électrique analogue, du véhicule. Les deuxième et troisième impulsions sont actives au niveau bas; le niveau de tension de la batterie correspond à une absence de signal.

L'invention vise aussi un dispositif de gestion d'un ballast d'une lampe à décharge gazeuse de projecteur de véhicule automobile adapté à la mise en oeuvre du procédé décrit ci-dessus.

Ce dispositif est du type de ceux, connus en soi, où une unité de commande électronique extérieure est reliée à un bloc de contrôle électronique du ballast pilotant un convertisseur DC/DC, un convertisseur DC/AC, et un bloc d'amorçage de la lampe.

Le dispositif selon l'invention est remarquable en ce que la liaison entre l'unité de commande électronique extérieure et le bloc de contrôle électronique du ballast comprend une liaison bifilaire dédiée, comportant une première ligne bidirectionnelle de transfert de données, et une seconde ligne unidirectionnelle de signalisation par l'unité de commande électronique.

Selon une variante, le dispositif selon l'invention est aussi remarquable en ce que la liaison entre l'unité de commande électronique extérieure et le bloc de contrôle électronique du ballast comprend une liaison monofilaire standard, de type LIN ou CAN, reliant l'unité de commande électronique à un module d'interface effectuant la conversion de protocole entre la liaison monofilaire standard et la liaison bifilaire dédiée.

Selon une autre variante similaire de l'invention, le module d'interface contrôle la puissance d'au moins deux feux, et est relié avantageusement à chacun des ballasts de ces feux par un exemplaire la liaison bifilaire dédié.

L'invention concerne aussi une utilisation du procédé et des dispositifs décrits ci-dessus particulièrement avantageuse dans un système d'éclairage évolué ou adaptatif, de type AFS, notamment pour les transitions phares/codes, l'adaptation à la lumière ambiante, et la modulation de l'intensité du faisceau dans les courbes.

Ces quelques spécifications essentielles auront rendu évidents pour l'homme de métier les avantages apportés par le procédé selon l'invention de gestion d'un ballast pour optimiser la durée de vie d'une lampe à décharge gazeuse de véhicule automobile par rapport à l'état de la technique antérieur.

Les spécifications détaillées du procédé, et de dispositifs adaptés à sa mise en oeuvre, sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** montre schématiquement les courbes de puissance d'alimentation fournie par le ballast selon différents modes de fonctionnement de la lampe dans le procédé selon l'invention, ainsi que les transitions possibles entre ces modes en fonction de commandes extérieures.
La **Figure 2** est une représentation schématique du protocole de communication utilisé par le procédé selon l'invention entre le ballast et l'unité de contrôle électronique extérieure.
La **Figure 3** est une représentation schématique des signaux de contrôle mis en oeuvre dans le procédé selon l'invention.
La **Figure 4** est un schéma bloc d'un dispositif convenant à la mise en oeuvre du procédé selon l'invention.
Les **Figures 5 et 6** sont, respectivement dans le cas d'un projecteur indépendant, et dans le cas de projecteurs jumelés, un schéma bloc représentant un dispositif mettant en oeuvre le procédé selon l'invention sur un réseau automobile embarqué de type LIN ou CAN.

### DESCRIPTION DES MODES DE REALISATION PREFERES DE L'INVENTION.

La commutation de l'état « éteint » à l'état « allumé » d'une lampe à décharge gazeuse, par exemple une lampe au xénon, est un processus beaucoup plus complexe que la simple mise sous tension d'une lampe à incandescence.

Pour un rendement optimum et une durée de vie maximale de la lampe, la puissance électrique appliquée au cours des phases d'amorçage, d'allumage et de régime stabilisé doit varier en fonction du temps selon une loi prédéterminée et propre à chaque lampe. La puissance appliquée dans une phase influe sur la puissance à appliquer dans une autre phase. Par exemple, si la puissance appliquée au cours des phases d'amorçage et d'allumage est insuffisante, la lampe pourra ne pas être assez chaude, et le rendement en régime stabilisé sera plus faible. Ce régime nécessitera donc une plus grande puissance électrique d'alimentation pour atteindre la même puissance lumineuse.

Alors que le fonctionnement d'une lampe à incandescence est simplement caractérisé par un « point » de fonctionnement (c'est-à-dire la valeur de la tension appliquée et la valeur de l'intensité du courant), celui d'une lampe à décharge gazeuse se caractérise par un « mode » de fonctionnement représenté par une courbe de variation de la puissance électrique appliquée en fonction du temps.

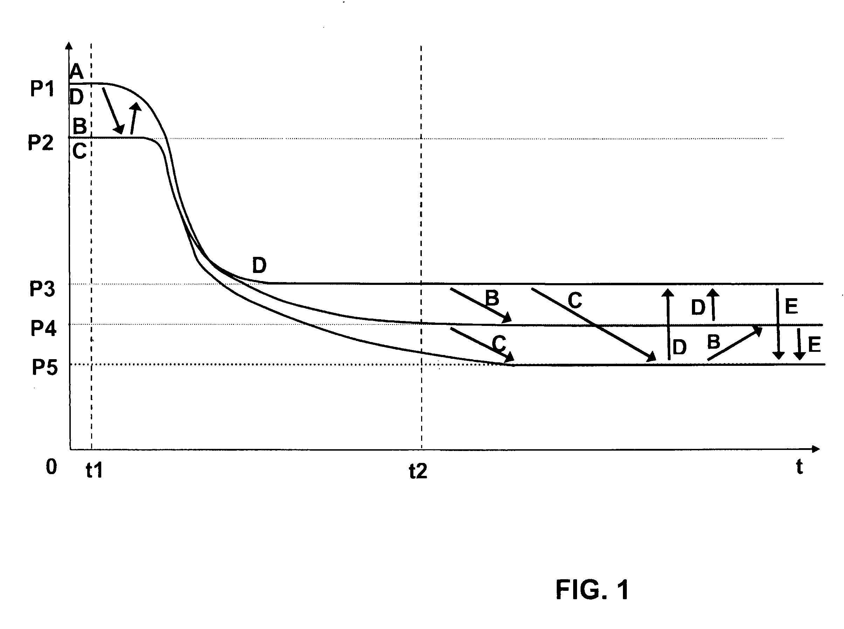

A titre d'exemple, trois modes de fonctionnement différents d'un système à xénon, en plus d'un mode de fonctionnement par « défaut » ont été représentés sur la **Figure 1.**

Dans le mode par défaut A, la puissance initiale appliquée P1 au démarrage (t est inférieur à t1), c'est-à-dire dans les premières dizaines de millisecondes, est importante. Dans ce mode A, après quelques dizaines de secondes (t supérieur à t2), la puissance appliquée est stabilisée à une valeur nominale moyenne P4.

Ce mode par défaut correspond au cas simple où la commutation de la lampe est commandée par un relais, électromécanique ou à l'état solide.

Dans le cas d'un système de type AFS, ou en général dans le cas d'un système évolué où l'on cherche à augmenter la durée de vie de la lampe en adaptant au mieux la puissance lumineuse demandée en fonction des circonstances, la lampe est commutée dans d'autres modes B, C, D où elle est temporairement en surpuissance ou, au contraire, en régime économique.

Pour un appel de phares, par exemple, la lampe est commutée dans un mode D où la puissance initiale P1 appliquée au démarrage est la même que celle appliquée dans le régime par défaut A, mais au cours de la phase d'allumage (entre t1 et t2), cette puissance P3 est supérieure.

En pratique, les modes économiques B, C, où la puissance P2 initiale appliquée est inférieure à celle du mode par défaut A et ou la puissance nominale en régime stabilisé P4, P5 est inférieure ou égale à celle de ce mode, correspondent à la position « codes » ou à l'éclairage de jour.

Dans certaines formes de réalisation, il peut également être prévu un mode de fonctionnement E qui correspond à une baisse de puissance abrupte de la puissance P3 à P5 ou P3 à P4. Le mode E peut par exemple correspondre à un besoin en termes de sécurité de fonctionnement (non éblouissement dans des situations de défaut) dans le cas de fonctions AFS, DBL par exemple.

Le procédé selon l'invention a pour but de gérer la commutation de ces modes.

Comme on l'a déjà remarqué, le fonctionnement de la lampe dans une phase dépend du fonctionnement dans la phase précédente. Les signaux de commande COM1 sur lesquels repose le procédé selon l'invention ne forcent donc pas directement un point de fonctionnement en fonction de leurs valeurs S1, S2, S3, mais pilotent les transitions d'un mode à un autre, c'est-à-dire que la puissance appliquée à la lampe en réponse à un signal de commande donné S1, S2, ou S3 dépend de la phase de fonctionnement dans la laquelle elle se trouve.

**La Table I** suivante indique, a titre d'exemple, les transitions possibles vers les quatre modes A,B,C,D décrits ci-dessus à la réception de trois signaux de commande S1, S2, S3 selon les phases de fonctionnement de la lampe (« Pi » signifie « puissance initiale » ; « Pn » signifie « puissance nominale »).

**Table I**

| COM1 | Réception avant t1 (amorçage) | Réception entre t1 et t2 (allumage) | Réception après t2 (régime stabilisé) | Mode |
|---|---|---|---|---|
| néant | Pi=P1 Pn=P4 | Pi=P1 Pn=P4 | Pn=P4 | A |
| S1 | Pi=P2 Pn=P4 | Pi=P1 Pn=P4 | Pn=P4 | B |
| S2 | Pi=P2 Pn=P5 | Pi=P1 Pn=P5 | Pn=P5 | C |
| S3 | Pi=P1 Pn=P3 | Pi=P1 Pn=P3 | Pn=P3 | D |

Dans les modes de réalisation préférés de l'invention, la puissance initiale par défaut appliquée par le système à xénon en cas d'absence de signaux de commande a une valeur prédéterminée P1 par exemple de 65W.

Dans la même situation, la puissance nominale par défaut en régime stabilisé a une valeur prédéterminée P4 par exemple de 34W.

Les trois signaux de commande S1, S2, S3 correspondent respectivement avantageusement :
- à une puissance initiale spécifique d'une valeur prédéterminée P2=50W, ou P2= 50W, ou bien P4=65W et à une puissance nominale spécifique d'une valeur prédéterminée P4=34W, ou P5=30W, ou bien P3=38W quand la commande est reçue par le ballast dans la phase d'amorçage ;
- à une puissance initiale spécifique d'une valeur prédéterminée P1= 65W, ou P1=65W, ou bien P1=65W et à une puissance nominale spécifique d'une valeur prédéterminée P4=34W, ou P5=30W, ou bien P3=38W quand la commande est reçue par le ballast dans la phase d'allumage ;
- à une puissance nominale spécifique d'une valeur prédéterminée P4=34W, ou P5=30W, ou bien P1=38W quand la commande est reçue par le ballast dans la phase de régime stabilisé.
   La fiabilité de la commande par un système extérieur X des transitions entre les différents modes A, B, C, D de fonctionnement du système à xénon P d'un projecteur est assurée dans le procédé selon l'invention grâce à un signal de validation COM2 des signaux de commande COM1.

Le système à xénon P est aussi capable de signaler un défaut de fonctionnement au système extérieur X, et sur demande de ce système X de transmettre un code d'anomalie A1, A2, A3.

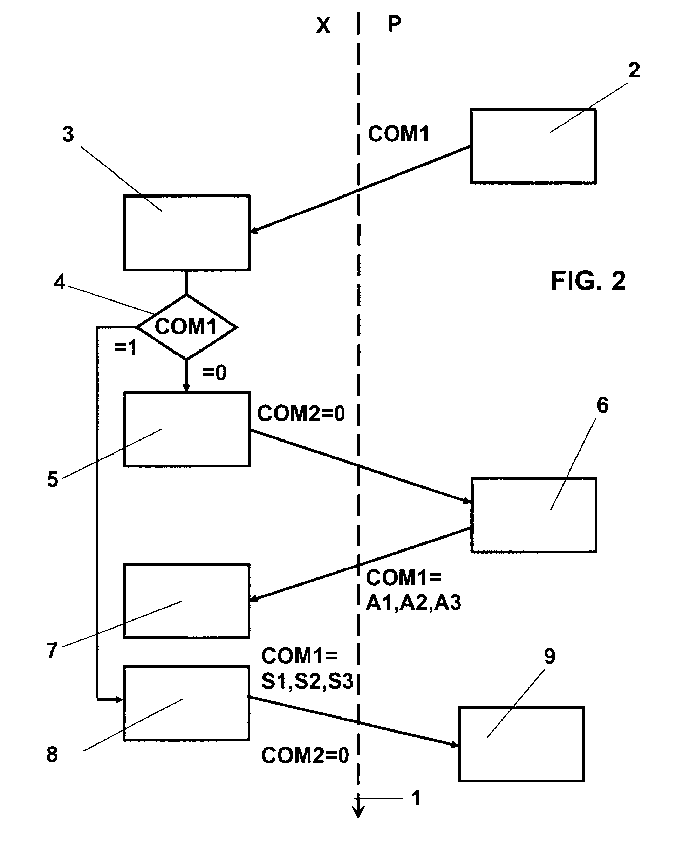

Le protocole de communication au cours du temps 1 entre le système à xénon P et le système extérieur X est représenté par le diagraphe de la **Figure 2.**

Dans l'étape de départ 2, le système à xénon P signale de manière binaire ses conditions de fonctionnement, normales ou anormales, au système extérieur X sur le même premier canal de communication COM1 que celui des signaux de commandes S1, S2, S3.

Le système extérieur X lit les conditions de fonctionnement du système à xénon P au cours d'une deuxième étape 3 du protocole, et détermine 4 s'il présente une anomalie.

Si le système à xénon P présente une anomalie (COM1=0), le système extérieur X transmet au cours d'une troisième étape 5 une demande d'état (COM2=0) au système à xénon P sur le même second canal de communication COM2 que celui du signal de validation des signaux de commande S1, S2, S3.

Après réception de cette demande d'état par le système à xénon P au cours d'une quatrième étape 6, celui-ci transmet un code d'anomalie A1, A2, A3 sur le premier canal de communication COM1.

Ce code d'anomalie A1, A2, A3 ainsi que des codes d'anomalie propriétaire peuvent être lus par le système extérieur X au cours d'une cinquième étape 7.

Si au cours du test 4 suivant la deuxième étape 3, le système extérieur X détermine que les conditions de fonctionnement du système à xénon P sont normales (COM1=1), il transmet au système à xénon P les signaux de commande S1, S2, S3 appropriés pour un changement de mode A, B, C, D et le signal de validation (COM2=0) au cours d'une sixième étape 8.

Au cours de l'étape finale 9 du protocole, le système à xénon P décode les signaux de commande S1, S2, S3.

Il existe de nombreuses solutions techniques permettant de réaliser la couche physique susceptible de supporter le protocole de communication décrit ci-dessus, notamment des liaisons de type « série » ou des réseaux de bord de type LIN ou CAN.

Beaucoup de solutions standard ont l'inconvénient de faire appel à des composants électroniques relativement complexes dont le coût d'intégration n'est pas négligeable.

De plus, ces solutions standard présentent en général des performances élevées qui ne sont pas réellement adaptées, compte tenu de la simplicité du protocole et des faibles débits d'information requis.

Enfin, le diagnostique des pannes de ces solutions nécessitent souvent un équipement dédié.

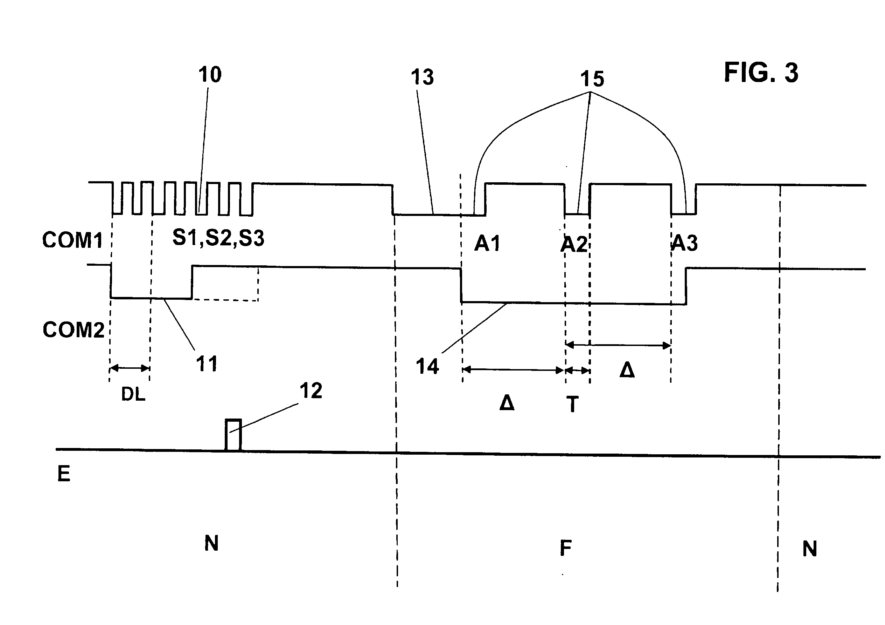

Les signaux mis en oeuvre par le procédé selon l'invention représentés sur la Figure 3 sont au contraire facilement visualisables au moyen d'un simple oscilloscope, et les défauts de fonctionnement sont détectés par un simple voltmètre.

Les signaux de commande S1, S2, S3 émis par le système extérieur X sur le premier canal de communication COM1 en direction du système à xénon P, dans des conditions de fonctionnement normales N, sont constitués d'un premier train d'impulsions rectangulaires 10 dont la fréquence fixe prédéterminée est de préférence égale à 400 Hz, en tous cas comprise entre 380 Hz et 420 Hz.

Ces impulsions 10 ont une amplitude positive comprise entre 0V et le niveau de tension de la source d'énergie de bord, c'est-à-dire 12V pour une alimentation standard par batterie.

Le codage des signaux de commande S1, S2, S3 est effectuée par une modulation de la largeur des impulsions 10. Un niveau actif est un niveau de tension inférieur à 1 V ; un niveau de tension supérieur à 6V, tel que celui de la batterie, correspond à une absence de signal.

Dans les modes de réalisation préférés de l'invention, le rapport cyclique des impulsions 10 a pour valeur 30%, ou 60%, ou bien 80%, selon le mode de fonctionnement B,C,D désiré indiqué dans la Table 1. Le mode de fonctionnement par défaut A est obtenu en l'absence de signal.

La transmission des signaux de commandes S1, S2, S3 est signalée par le système extérieur X au système à xénon P par l'envoi sur le second canal de communication COM2 d'un signal de validation constitué d'une première impulsion rectangulaire 11. Cette impulsion 11 a une amplitude comprise entre 0V et le niveau de tension de la batterie, c'est-à-dire habituellement 12V. Un niveau actif est un niveau inférieur à 1V; un niveau de tension supérieur à 6V correspond à une absence de signal.

L'impulsion de validation 11 est transmise pendant toute la durée de la transmission du train d'impulsions 10 des signaux de commande S1, S2, S3, ou au moins pendant une durée DL suffisante pour permettre la détection de ces signaux. De préférence, cette durée DL correspond à au moins deux périodes du train d'impulsions 10.

Dès qu'un signal de commande S1, S2, S3 a été décodé, l'état E du système à xénon P change 12, comme le montre le diagramme des temps de la **Figure** 2.

En cas d'anomalie de fonctionnement F du système à xénon P, une deuxième impulsion rectangulaire 13 est générée par celui-ci sur le premier canal de communication COM1. Cette impulsion 13 est active au niveau bas, c'est-à-dire de préférence, dans ce sens de communication sur ce canal, quand son niveau est inférieur à 3V.

Dès la détection d'un niveau bas sur le premier canal de communication COM1, le système extérieur X génère sur le second canal de communication COM2 une troisième impulsion rectangulaire 14 destinée déclencher la transmission par le système à xénon P sur le premier canal COM1 d'un second train d'impulsions 15 dont la durée T code le type d'anomalie A1, A2, A3.

La troisième impulsion rectangulaire 14 est active au niveau bas, c'est-à-dire quand son niveau de tension est inférieur à 1V. Les impulsions 15 du second train sont considérées comme actives quand leur niveau de tension est inférieur à 3V.

Dans les modes de réalisation préférés de l'invention, les impulsions 15 de ce second train sont émises par le système à xénon P à un intervalle de temps prédéterminé Δ, de préférence 10 ms, pendant toute la durée de l'impulsion de demande d'état 14 sur le second canal de communication COM2.

La durée de chacune des impulsions 15 du second train est, par exemple, de 0,5ms, 1 ms, 1,5 ms, 2 ms, 2,5 ms, ou 3 ms pour indiquer respectivement une extinction anormale, un courant élevé, une tension élevée, un courant faible, une tension faible, ou un défaut d'allumage de la lampe, ou bien un court-circuit du ballast du système à xénon P.

En l'absence d'une impulsion 14 de demande d'état (COM2=0) émise par le système extérieur X, le système à xénon P maintient au niveau bas le premier canal de communication COM1. Cet état est facilement détecté par un opérateur au moyen d'un simple voltmètre: une anomalie de fonctionnement du système à xénon P est donc aisément diagnostiquée.

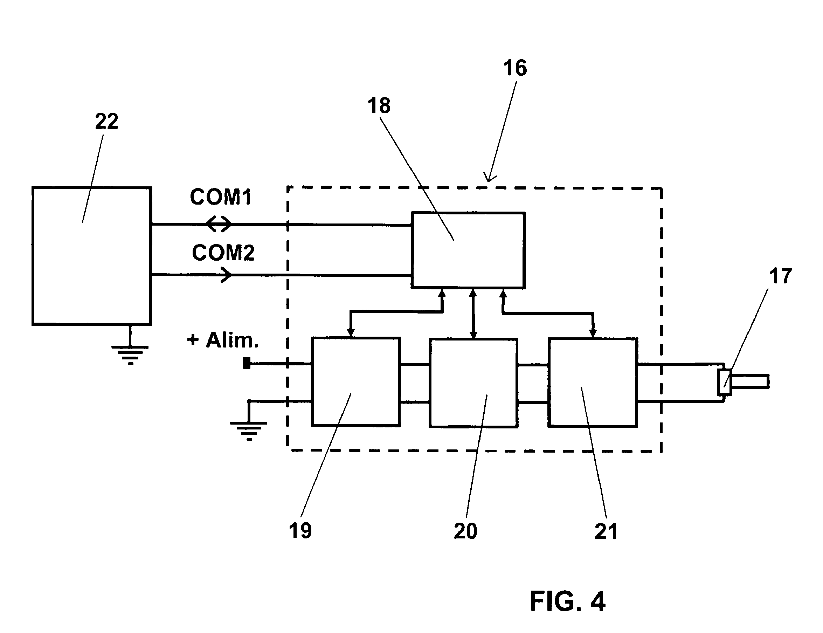

Le protocole 2, 3, 4, 5, 6, 7, 8, 9 et les signaux de contrôle 10, 11, 13, 14, 15 du procédé selon l'invention sont facilement implémentés sur un système extérieur X et un système à xénon P du type ceux représentés sur les Figures **4, 5 et 6**.

Le système à xénon P comprend, ce qui est connu en soi, un ballast 16 alimenté par la source d'énergie de bord + Alim et fournissant la puissance électrique nécessaire à une lampe au xénon 17.

Le ballast 16 est constitué d'un bloc de contrôle électronique 18 pilotant un convertisseur DC/DC 19, d'un convertisseur DC/AC 20, et d'un bloc d'amorçage 21 de la lampe 17. Dans d'autres formes de réalisation, le bloc d'amorçage 21 peut ne pas être inclus dans le ballast 16, mais être associé à la lampe en un ensemble lampe compact.

Le bloc de contrôle 18 est relié par une liaison bifilaire dédiée COM1, COM2 à une unité de commande électronique 22 du système extérieur X. Une première ligne bidirectionnelle COM1 assure la transmission des signaux de commande S1, S2, S3 et des signaux d'anomalie A1, A2, A3, la seconde ligne unidirectionnelle COM2 transmet les signaux de validation et de demande d'état.

La logique du bloc de contrôle 18 est avantageusement implémentée au moyen d'un ASIC, notamment la régulation de puissance interne, la mémorisation des courbes de puissance et la gestion du protocole de communication.

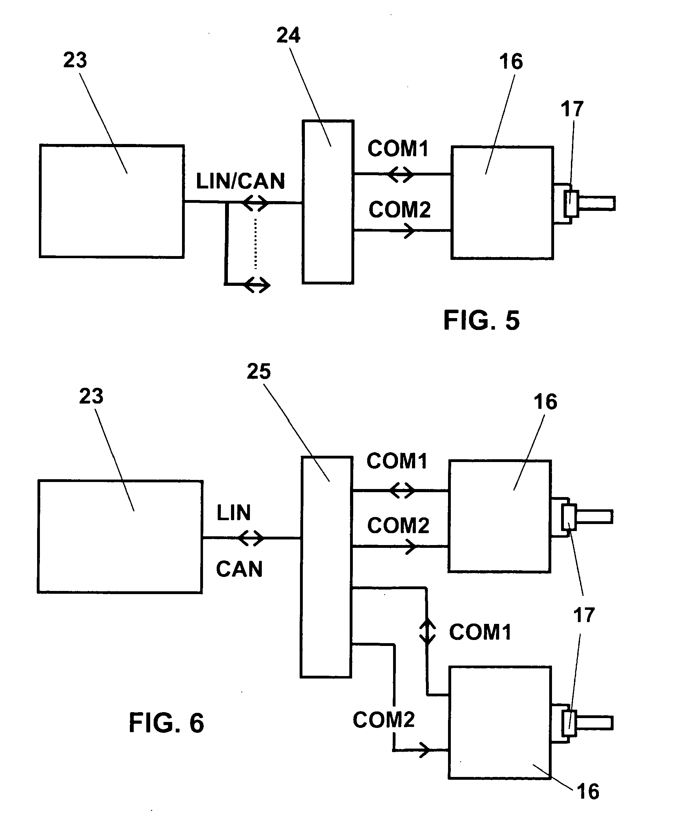

Selon une variante de réalisation représentée sur la **Figure 5,** le ballast 16 est relié par la liaison bifilaire dédiée COM1, COM2 à un module d'interface 24 assurant la conversion de protocole de et vers une unité de commande électronique standard 23 communiquant au moyen d'une liaison monofilaire standard de type LIN ou CAN.

Selon une autre variante de réalisation, représentée sur la **Figure 6,** deux ballasts 16 sont reliés à un module d'interface double 25.

L'avantage de cette architecture est de déplacer au niveau des modules d'interface 24, 25 la complexité de la gestion des protocoles standard, pour ne conserver au niveau des projecteurs qu'un système simple à développer, à fabriquer et à dépanner.

Selon d'autres variantes de réalisation, le ou les modules d'interface sont intégrés dans un module plus global gérant également partiellement ou totalement des fonctions d'éclairage LCS et notamment le DBL ou bien gérant plusieurs fonctions face avant dont l'éclairage. Les modules d'interface peuvent également, selon les applications, être intégrés totalement dans un dispositif d'éclairage et/ou de signalisation tel que projecteur, être associé à celui-ci sous la forme d'un module électronique monté sur le boîtier du projecteur ou bien former un élément séparé implanté ailleurs dans le véhicule.

Comme il va de soi l'invention ne se limite pas aux seuls modes d'exécution préférentiels décrits ci-dessus. Elle embrasse au contraire toutes les autres variantes possibles de réalisation.

Notamment les détails de la réalisation de la couche physique du protocole de communication mis en oeuvre par le procédé selon l'invention décrits ci-dessus ne sont aucunement limitatifs.

Toute autre implémentation ne sortirait pas du cadre de la présente invention dans la mesure où elle résulterait des revendications ci-après.

## Revendications

1. Procédé de gestion d'un ballast (16) d'une lampe (17) à décharge gazeuse de projecteur de véhicule automobile pour optimiser la durée de vie de ladite lampe (17), du type de ceux consistant à piloter les puissances d'alimentation initiale et nominale de ladite lampe (17) au moyen de signaux de contrôle au cours des phases de fonctionnement de ladite lampe (17) comprenant une phase d'amorçage, une phase d'allumage et une phase de régime stabilisé, **caractérisé en ce que** lesdits signaux de contrôle comprennent des signaux de commande (S1,S2,S3) générés extérieurement (8) audit ballast (16) forçant chacune desdites puissances d'alimentation à une valeur choisie parmi un ensemble de puissances prédéterminées (P1,P2,P3,P4,P5) en fonction de chacune desdites phases.

2. Procédé de gestion d'un ballast (16) d'une lampe (17) à décharge gazeuse de projecteur de véhicule automobile selon la revendication 1, **caractérisé en ce qu'**en l'absence desdits signaux de commande (S1,S2,S3) la valeur de ladite puissance d'alimentation initiale au cours desdites phases d'amorçage et d'allumage est une puissance initiale par défaut prédéterminée (P5) et ladite puissance d'alimentation nominale au cours de ladite phase de régime stabilisé est une puissance nominale par défaut prédéterminée (P1).

3. Procédé de gestion d'un ballast (16) d'une lampe (17) à décharge gazeuse de projecteur de véhicule automobile selon la revendication 2, **caractérisé en ce que** chacun desdits signaux de commande (S1,S2,S3) est associé à un mode de fonctionnement spécifique (B,C,D) de ladite lampe (17), et force lesdites puissances d'alimentation à une puissance initiale spécifique prédéterminée (P1,P2) et à une puissance nominale spécifique prédéterminée (P3,P4,P5) pour chacune desdites phases.

4. Procédé de gestion d'un ballast (17) d'une lampe (16) à décharge gazeuse de projecteur de véhicule automobile selon l'une quelconque des revendications 1 à 3, **caractérisé en ce que** lesdits signaux de contrôle comprennent de plus un signal de validation desdits signaux de commande (S1,S2,S3) généré extérieurement (8) audit ballast (16).

5. Procédé de gestion d'un ballast (16) d'une lampe (17) à décharge gazeuse de projecteur de véhicule automobile selon l'une quelconque des revendications 1 à 4, **caractérisé en ce que** lesdits signaux de contrôle comprennent de plus un signal d'anomalie généré (2) par ledit ballast (16) en cas d'anomalie (F) de fonctionnement.

6. Procédé de gestion d'un ballast (16) d'une lampe (17) à décharge gazeuse de projecteur de véhicule automobile selon la revendication 5, **caractérisé en ce que** lesdits signaux de contrôle comprennent de plus un signal de demande d'état généré extérieurement (5) audit ballast (16) consécutivement à la réception (3,4) dudit signal d'anomalie.

7. Procédé de gestion d'un ballast (16) d'une lampe (17) à décharge gazeuse de projecteur de véhicule automobile selon la revendication 6, **caractérisé en ce que** lesdits signaux de contrôle comprennent de plus un code d'anomalie (A1,A2,A3) généré (6) par ledit ballast (16) consécutivement à la réception (5) dudit signal de demande d'état.

8. Procédé de gestion d'un ballast d'une lampe à décharge gazeuse de projecteur de véhicule automobile selon les revendications 3 et 4, **caractérisé en ce que** chacun desdits signaux de commande (S1,S2,S3) est constitué d'un premier train d'impulsions rectangulaires (10) de fréquence prédéterminée et de rapport cyclique prédéterminé, et **en ce que** ledit signal de validation est une première impulsion rectangulaire (11) émise simultanément auxdits signaux de commande (S1,S2,S3) et pendant une durée (DL) au moins égale à un nombre minimal de périodes dudit train (10), de préférence deux.

9. Procédé de gestion d'un ballast (16) d'une lampe (17) à décharge gazeuse de projecteur de véhicule automobile selon la revendication 8, **caractérisé en ce que** les amplitudes dudit premier train (10) et de ladite première impulsion (11) sont positives et égales à la tension de la batterie (+Alim), ou de la source d'énergie électrique analogue, dudit véhicule, et **en ce que** ladite première impulsion de validation (11) est active au niveau bas, et le niveau de tension (+Alim) de la batterie correspond à une absence de signal.

10. Procédé de gestion d'un ballast (16) d'une lampe (17) à décharge gazeuse de projecteur de véhicule automobile selon la revendication 9, **caractérisé en ce que** ladite puissance initiale spécifique prédéterminée est environ 65W (P1), ladite puissance nominale par défaut prédéterminée est environ 34W (P4), et **en ce que** ledit rapport cyclique a pour valeur environ 30%, ou environ 60%, ou bien environ 80% correspondant respectivement :
- à une puissance initiale spécifique prédéterminée de environ 50W (P2), ou environ 50W (P2), ou bien environ 65W (P1) et à une puissance nominale spécifique prédéterminée de environ 34W (P4), ou environ 30W (P5), ou bien environ 38W (P3) quand la commande est reçue par ledit ballast (16) dans ladite phase d'amorçage ;
- à une puissance initiale spécifique prédéterminée de environ 65W (P1), ou environ 65W (P1), ou bien environ 65W (P1) et à une puissance nominale spécifique prédéterminée de environ 34W (P4), ou environ 30W (P5), ou bien environ 38W (P3) quand la commande est reçue par ledit ballast (16) dans ladite phase d'allumage ;
- à une puissance nominale spécifique prédéterminée de environ 34W (P4), ou environ 30W (P5), ou bien environ 38W (P3) quand la commande est reçue par ledit ballast (16) dans ladite phase de régime stabilisé.

11. Procédé de gestion d'un ballast (16) d'une lampe (17) à décharge gazeuse de projecteur de véhicule automobile selon les revendications 5, 6 et 7, **caractérisé en ce que** ledit signal d'anomalie, ledit signal de demande d'état et ledit code d'anomalie (A1,A2,A3) sont respectivement une deuxième impulsion rectangulaire (13), une troisième impulsion rectangulaire (14), et un second train d'impulsions rectangulaires (15), la durée (T) de chacune des impulsions (15) dudit second train étant représentative d'un type d'anomalie.

12. Procédé de gestion d'un ballast (16) d'une lampe (17) à décharge gazeuse de projecteur de véhicule automobile selon la revendication 11, **caractérisé en ce que** les amplitudes desdites deuxième et troisième impulsions (13,14) et dudit second train (15) sont positives et égales à la tension de la batterie (+Alim), ou de la source d'énergie électrique analogue, dudit véhicule, et **en ce que** lesdites deuxième et troisième impulsions (13,14) sont actives au niveau bas, et le niveau de tension de la batterie (+Alim) correspond à une absence de signal.

13. Procédé de gestion d'un ballast (16) d'une lampe (17) à décharge gazeuse de projecteur de véhicule automobile selon la revendication 12, **caractérisé en ce que** les impulsions (15) dudit second train sont émises par ledit ballast (16) à un intervalle de temps prédéterminé (Δ) pendant toute la durée de ladite troisième impulsion (14), et **en ce que** la durée (T) de chacune des impulsions (15) dudit second train est de environ 0,5ms, environ 1 ms, environ 1,5 ms, environ 2 ms, environ 2,5 ms, ou environ 3 ms pour indiquer respectivement une extinction anormale, un courant élevé, une tension élevée, un courant faible, une tension faible, ou un défaut d'allumage de ladite lampe, ou bien un court-circuit dudit ballast (16).

14. Dispositif de gestion d'un ballast (16) d'une lampe (17) à décharge gazeuse de projecteur de véhicule automobile adapté à la mise en oeuvre du procédé selon l'une quelconque des revendications 1 à 13 précédentes du type de ceux où une unité de commande électronique (22,23) est reliée à un bloc de contrôle électronique (18) dudit ballast (16) pilotant un convertisseur DC/DC (19), un convertisseur DC/AC (20) et un bloc d'amorçage (21) de ladite lampe (17), **caractérisé en ce que** la liaison entre ladite unité de commande électronique (22,23) et ledit bloc de contrôle (18) comprend une liaison bifilaire (COM1, COM2) dédiée, comportant une première ligne bidirectionnelle (COM1) de transfert de données, et une seconde ligne unidirectionnelle (COM2) de signalisation par ladite unité de commande électronique (22,23).

15. Dispositif de gestion d'un ballast (16) d'une lampe (17) à décharge gazeuse de projecteur de véhicule automobile selon la revendication 14, **caractérisé en ce que** la liaison entre ladite unité de commande électronique (23) et ledit bloc de contrôle (18) comprend une liaison monofilaire standard (LIN,CAN), de type LIN ou CAN, reliant ladite unité de commande électronique (23) à un module d'interface (24,25) effectuant la conversion de protocole entre ladite liaison monofilaire (LIN,CAN) et ladite liaison bifilaire (COM1,COM2).

16. Dispositif de gestion d'un ballast (16) d'une lampe (17) à décharge gazeuse de projecteur de véhicule automobile selon la revendication 15, **caractérisé en ce que** ledit module d'interface (25) est relié à au moins deux exemplaires dudit ballast (16), chacun par un exemplaire de ladite liaison bifilaire (COM1,COM2).

17. Utilisation du procédé et/ou du dispositif de gestion d'un ballast (16) d'une lampe (17) à décharge gazeuse de projecteur de véhicule automobile selon l'une quelconque des revendications 1 à 16 précédentes dans un système d'éclairage évolué ou adaptatif, de type AFS, notamment pour les transitions phares/codes, l'adaptation à la lumière ambiante, et la modulation de l'intensité du faisceau dans les courbes.
